# EUROPEAN PATENT APPLICATION

(11) **EP 4 675 951 A1**
(43) Date of publication of application: **07.01.2026**
(21) Application number: 25187294.1
(22) Date of filing: 03.07.2025
(51) Int. Cl.: H04L 1/00, H04L 27/00, H04L 5/00, H04W 28/00, H04W 84/12

(54) **STREAM PARSER AND SEGMENT PARSER DESIGNS FOR UNEQUAL MODULATION OF SPATIAL STREAMS IN WIRELESS COMMUNICATIONS**

(30) Priority: 03.07.2024 US 202463667267 P; 30.06.2025 US 202519254008
(71) Applicant: MEDIATEK INC., Hsinchu City 30078 (TW)
(72) Inventor: HU, Shengquan, San Jose (US); LIU, Jianhan, San Jose (US); PARE, Jr., Thomas Edward, San Jose (US)
(74) Representative: Hoefer & Partner Patentanwälte mbB

(57) **Abstract**

Various schemes pertaining to stream parser and segment parser designs for unequal modulation, UEQM, of spatial streams in wireless communications are described. An apparatus, e.g., an access point, AP, station, STA, or non-AP STA, processes a stream of bits by: -a- encoding the stream of bits into a stream of coded bits; and -b-parsing the stream of coded bits into a plurality of streams of coded bits (1010). The apparatus then transmits the plurality of streams of coded bits with UEQM in a plurality of spatial streams (1020).

## Description

### CROSS REFERENCE TO RELATED PATENT APPLICATION

The present disclosure is part of a non-provisional patent application claiming the priority benefit of U.S. Provisional Patent Application No. 63667,267, filed 03 July 2024, the content of which being incorporated by reference in its entirety.

### TECHNICAL FIELD

The present disclosure is generally related to wireless communications and, more particularly, to stream parser and segment parser designs for unequal modulation of spatial streams in wireless communications.

### BACKGROUND

Unless otherwise indicated herein, approaches described in this section are not prior art to the claims listed below and are not admitted as prior art by inclusion in this section.

In wireless communications such as Wi-Fi (or WiFi) and wireless local area network (WLAN) systems in accordance with one or more Institute of Electrical and Electronics Engineers (IEEE) 802.11be standards (e.g., IEEE 802.11ax/be), for a multiple-input-multiple-output (MIMO) channel with beamforming, the channel condition number could be very large such as, for example, 10-20dB. On the other hand, allocating unequal modulation (UEQM) to adapt to signal quality in each spatial stream can improve system throughput and reliability. Also, UEQM on a given spatial stream can be operated with multi-resource units (MRUs).

At the time of the present disclosure, how to parse a stream of input bits into one or more spatial streams for UEQM transmission have yet to be defined or otherwise specified in the IEEE specification. Therefore, there is a need for a solution of stream parser and segment parser designs for UEQM of spatial streams in wireless communications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods and apparatuses pertaining to stream parser and segment parser designs for UEQM of spatial streams in wireless communications. It is believed that implementations of one or more of the various schemes proposed herein may allow allocation of allocating UEQM on spatial streams to adapt to signal quality in each spatial stream to improve system throughput and reliability. A method and an apparatus according to the invention are defined in the independent claims. The dependent claims define preferred embodiments thereof. In particular, the apparatus according to the invention is adapted to carry out the method steps according to the invention as defined in the method claims.

In one aspect, a method may involve processing a stream of bits by: (a) encoding the stream of bits into a stream of coded bits; and (b) parsing the stream of coded bits into a plurality of streams of coded bits. The method may also involve transmitting the plurality of streams of coded bits with UEQM in a plurality of spatial streams.

In another aspect, an apparatus may include a transceiver configured to communicate wirelessly and a processor coupled to the transceiver. The processor may process a stream of bits by: (a) encoding the stream of bits into a stream of coded bits; and (b) parsing the stream of coded bits into a plurality of streams of coded bits. The processor may then transmit the plurality of streams of coded bits with UEQM in a plurality of spatial streams.

It is noteworthy that, although description provided herein may be in the context of certain radio access technologies, networks and network topologies such as, Wi-Fi, the proposed concepts, schemes and any variation(s)/derivative(s) thereof may be implemented in, for and by other types of radio access technologies, networks and network topologies such as, for example and without limitation, Bluetooth, ZigBee, 5^{th} Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of example design under a proposed scheme in accordance with the present disclosure.
FIG. 3 is a diagram of example design under a proposed scheme in accordance with the present disclosure.
FIG. 4 is a diagram of an example design under a proposed scheme in accordance with the present disclosure.
FIG. 5 is a diagram of an example design under a proposed scheme in accordance with the present disclosure.
FIG. 6 is a diagram of an example design under a proposed scheme in accordance with the present disclosure.
FIG. 7 is a diagram of example design under a proposed scheme in accordance with the present disclosure.
FIG. 8 is a diagram of an example design under a proposed scheme in accordance with the present disclosure.
FIG. 9 is a block diagram of an example communication system under a proposed scheme in accordance with the present disclosure.
FIG. 10 is a flowchart of an example process under a proposed scheme in accordance with the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to stream parser and segment parser designs for UEQM of spatial streams in wireless communications. According to the present disclosure, a number of possible solutions may be implemented separately or jointly. That is, although these possible solutions may be described below separately, two or more of these possible solutions may be implemented in one combination or another.

It is noteworthy that, in the present disclosure, a regular RU (RRU) refers to a RU with tones that are continuous (e.g., immediately adjacent to one another) and not interleaved, interlaced or otherwise distributed. Moreover, a 26-tone regular RU may be interchangeably denoted as RU26 (or RRU26), a 52-tone regular RU may be interchangeably denoted as RU52 (or RRU52), a 106-tone regular RU may be interchangeably denoted as RU106 (or RRU106), a 242-tone regular RU may be interchangeably denoted as RU242 (or RRU242), and so on. Moreover, an aggregate (26+52)-tone regular multi-RU (MRU) may be interchangeably denoted as MRU78 (or RMRU78), an aggregate (26+106)-tone regular MRU may be interchangeably denoted as MRU132 (or RMRU132), and so on. Furthermore, a distributed-tone RU (DRU) refers to a RU with tones that are non-discontinuous (e.g., not immediately adjacent to one another) and interleaved, interlaced or otherwise distributed. Accordingly, a 26-tone distributed-tone RU may be interchangeably denoted as DRU26, a 52-tone distributed-tone RU may be interchangeably denoted as DRU52, a 106-tone distributed-tone RU may be interchangeably denoted as DRU106, a 242-tone distributed-tone RU may be interchangeably denoted as DRU242, a 484-tone distributed-tone RU may be interchangeably denoted as DRU484, a 996-tone distributed-tone RU may be interchangeably denoted as DRU996, a 2x996-tone distributed-tone RU may be interchangeably denoted as DRU2x996, and so on.

It is also noteworthy that, in the present disclosure, a bandwidth of 20MHz may be interchangeably denoted as BW20 or BW20M, a bandwidth of 40MHz may be interchangeably denoted as BW40 or BW40M, a bandwidth of 80MHz may be interchangeably denoted as BW80 or BW80M, a bandwidth of 160MHz may be interchangeably denoted as BW160 or BW160M, a bandwidth of 240MHz may be interchangeably denoted as BW240 or BW240M, a bandwidth of 320MHz may be interchangeably denoted as BW320 or BW320M, a bandwidth of 480MHz may be interchangeably denoted as BW480 or BW480M, a bandwidth of 500MHz may be interchangeably denoted as BW500 or BW500M, a bandwidth of 520MHz may be interchangeably denoted as BW520 or BW520M, a bandwidth of 540MHz may be interchangeably denoted as BW540 or BW540M, a bandwidth of 640MHz may be interchangeably denoted as BW640 or BW640M.

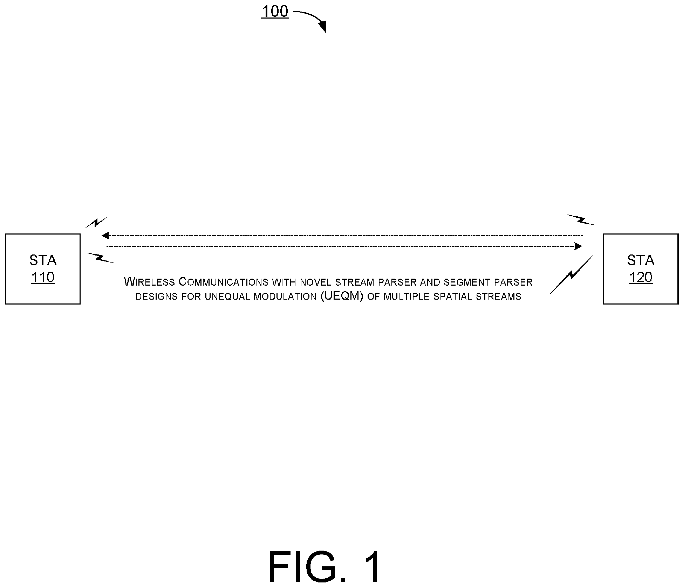

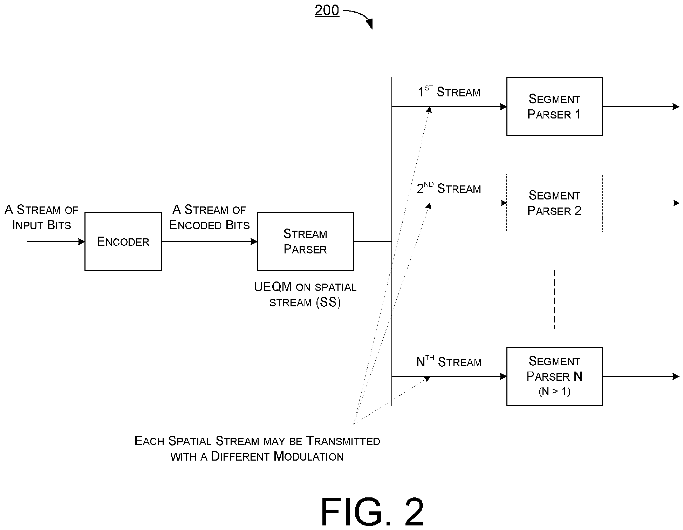

FIG. 1 illustrates an example network environment 100 in which various solutions and schemes in accordance with the present disclosure may be implemented. FIG. 2 ~ FIG. 10 illustrate examples of implementation of various proposed schemes in network environment 100 in accordance with the present disclosure. The following description of various proposed schemes is provided with reference to FIG. 1 ~ FIG.10.

Referring to FIG. 1, network environment 100 may involve at least a station (STA) 110 communicating wirelessly with a STA 120. Either of STA 110 and STA 120 may be an access point (AP) STA and/or either of STA 110 and STA 120 may function as a non-AP STA. In some cases, STA 110 and STA 120 may be associated with a basic service set (BSS) in accordance with one or more IEEE 802.11 standards (e.g., IEEE 802.11be and future-developed standards). Each of STA 110 and STA 120 may be configured to communicate with each other by utilizing the stream parser and segment parser designs for UEQM of spatial streams in wireless communications in accordance with various proposed schemes described below. It is noteworthy that the UEQM in the various proposed schemes may be in the frequency domain and/or the spatial domain. It is also noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

FIG. 2 illustrates example design 200 under a proposed scheme in accordance with the present disclosure. Design 200 may pertain to an architecture of a portion of a circuit configured to encode and parse a stream of input bits. Design 200 may be implemented by each of STA 110 and STA 120. Referring to FIG. 2, an incoming stream of input bits may be encoded by an encoder into a stream of encoded or coded bits, which is provided to a stream parser. The encoder may be a low-density parity-check (LDPC) encoder (e.g., for UEQM) or a binary convolutional code (BCC) encoder (e.g., for equal modulation). The stream parser may parse the stream of encoded bits to a plurality of segment parsers, such as segment parser 1 ~ segment parser N, with N denoting the number of spatial streams (Nₛₛ) and N > 1 (e.g., 2, 3 or 4 or another number). The stream parser may parse or allocate the stream of encoded bits into different streams to the different segment parsers. With UEQM, different modulations are applied to different spatial streams and thus the number of bits per constellation point is different from one constellation point to another. Thus, with different modulations applied to different spatial streams under UEQM, the stream parser may parse or allocate different bit sequences in the stream of encoded bits to respective different segment parsers (e.g., bit sequences of a given spatial stream are parsed/allocated to a corresponding segment parser) so that a respective modulation may be applied to each spatial stream. With larger MRU and/or wider-bandwidth transmission, segment parsing may be further performed on each spatial stream (in addition to stream parsing) to allocate the encoded bits onto different resource units (RUs). Specifically, segment parsing may be performed per spatial stream, and a respective modulation may be applied to each spatial stream such that, with UEQM, different modulations may be applied to different spatial streams.

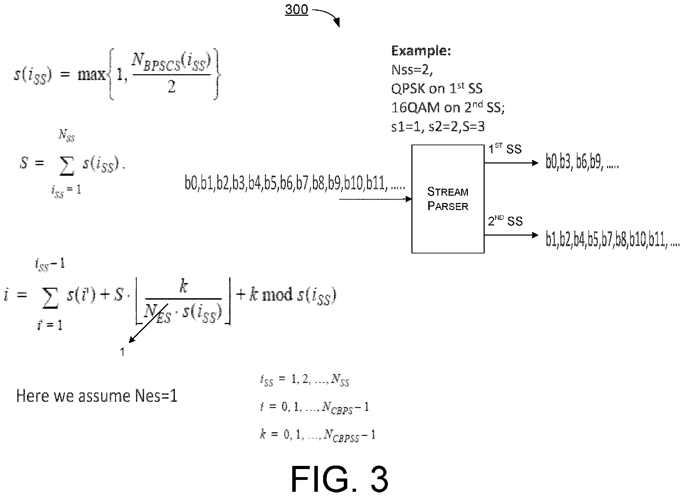

FIG. 3 illustrates example design 300 under a proposed scheme in accordance with the present disclosure. Design 300 may pertain to stream parsing for UEQM on spatial streams. Design 300 may be implemented by each of STA 110 and STA 120. Referring to FIG. 3, a round robin-style parser according to the IEEE 802.11n or High Throughput (HT) specification may be utilized as the stream parser of design 200 in parsing or otherwise allocating the stream of encoded bits into different spatial streams. Under the proposed scheme, consecutive blocks or groups of *s(iₛₛ)* bits (with "s" denoting a bit sequence and "*iₛₛ*" denoting a spatial stream index) may be assigned to different spatial streams in a round robin fashion. For instance, a stream of bits b0, b1, b2, b3, b4, b5, b6, b7, b8, b9, b10, b11, ... may be parsed into two spatial streams, a first spatial stream (1^{st} SS) and a second spatial stream (2^{nd} SS), with bits b0, b3, b6, b9, ... parsed or allocated to the 1^{st} SS and with bits b1, b2, b4, b5, b7, b8, b10, b11, ... parsed or allocated to the 2^{nd} SS. In the example shown in FIG. 3, with Nₛₛ = 2, a first type of modulation (e.g., quadrature phase-shift keying (QPSK)) may be applied to the 1^{st} SS while a second type of modulation (e.g., 16 quadrature amplitude modulation (16QAM)) different from the first type of modulation may be applied to the 2^{nd} SS.

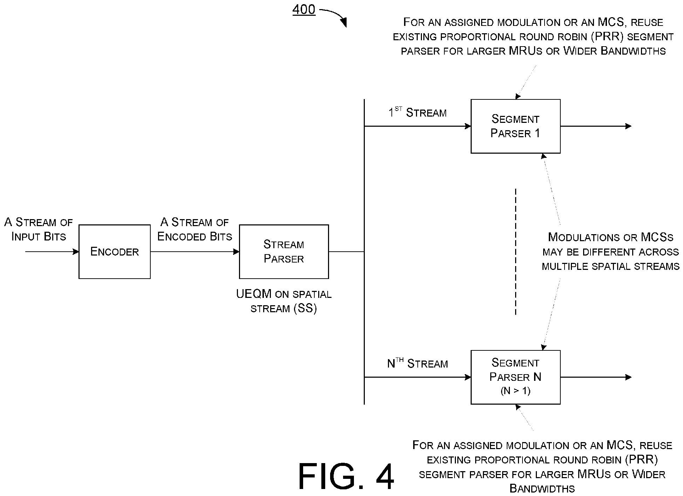

FIG. 4 illustrates an example design 400 under a proposed scheme in accordance with the present disclosure. Design 400 may pertain to an architecture of a portion of a circuit configured to encode and parse a stream of input bits. Design 400 may be implemented in each of STA 110 and STA 120. Referring to FIG. 4, as segment parsing is performed per spatial stream under the proposed scheme, the same modulation (or modulation and coding scheme (MCS)) may be applied to the bits of the same spatial stream (even for different RUs of the same spatial stream) such that different modulations/MCSs may be applied to different spatial streams. Moreover, each of the multiple segment parsers may be a proportional round robin (PRR) parser (e.g., configured to perform a round robin-style parsing according to the IEEE 802.11be specification) and perform segment parsing on the respective spatial stream for larger MRUs (e.g., 3x or 4x 996-tone RUs) or wider bandwidths (e.g., 320MHz).

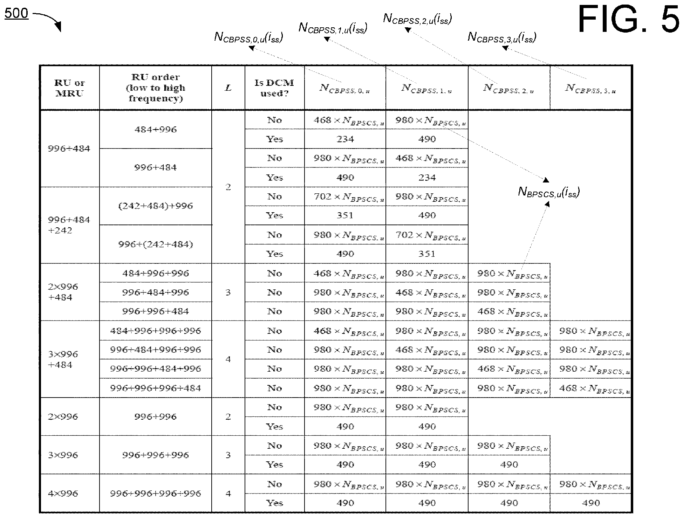

FIG. 5 illustrates an example design 500 under a proposed scheme in accordance with the present disclosure. Design 500 may pertain to segment parsing for UEQM on spatial streams. Design 500 may be implemented by each of STA 110 and STA 120. Under the proposed scheme, since each spatial stream may be assigned a respective modulation (or MCS) different from that of one or more other spatial streams, the value of the number of coded bits per spatial stream (N_{CBPSS}) may be associated not only with frequency subblock and user index, but also with spatial stream index (*iₛₛ*). Thus, the parameter of the number of coded bits per spatial stream ("*iₛₛ*") per frequency subblock ("*l*") per user ("*u*"), N_{CBPSS,l,u}, as defined in the existing IEEE specification may be changed to N_{CBPSS,l,u}(*iₛₛ*) and the value of the number of coded bits per spatial stream per user, N_{CBPSS,u}, as defined in the existing IEEE 802.11be specification may also be changed to N_{CBPSS,u}(*iₛₛ*), while all other parameters may remain unchanged, as shown in FIG. 5.

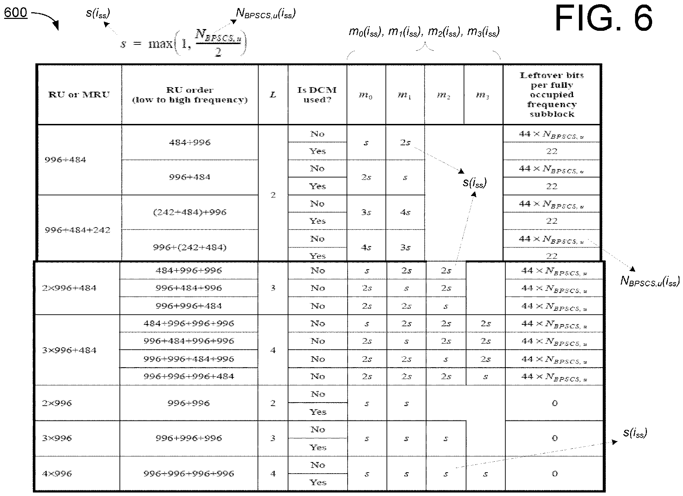

FIG. 6 illustrates an example design 600 under a proposed scheme in accordance with the present disclosure. Design 600 may pertain to segment parsing for UEQM on spatial streams. Design 600 may be implemented by each of STA 110 and STA 120. Under the proposed scheme, since each spatial stream may be assigned a respective modulation (or MCS) different from that of one or more other spatial streams, segment parser parameters may be associated with spatial stream index (*iₛₛ*). Thus, the parameters of the number of bit sequences allocated per RU, m₀, m₁, m₂, m₃, as defined in the existing IEEE 802.11be specification may be changed to m₀(*iₛₛ*), m₁(*iₛₛ*), m₂(*iₛₛ*), m₃(*iₛₛ*), respectively. Moreover, the parameter s may be changed to *s*(*iₛₛ*), and the value of the number of bits per subcarrier per spatial stream, N_{BPSCS,u}, may be changed to N_{BPSCS,u}(*iₛₛ*), while all other parameters may remain unchanged, as shown in FIG. 6.

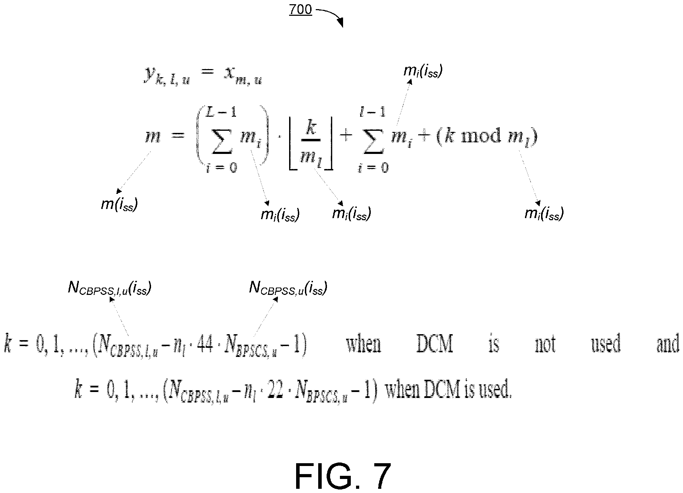

FIG. 7 illustrates example design 700 under a proposed scheme in accordance with the present disclosure. Design 700 may pertain to segment parsing for UEQM on spatial streams. Design 700 may be implemented by each of STA 110 and STA 120. Under the proposed scheme, UEQM entails a per-stream operation and the bits in each block of N_{CBPSS,l,u} bits may be determined by the segment parser, as shown in the equation listed in FIG. 7. As shown in FIG. 7, since segment parsing is spatial stream index-dependent, some of the original parameters in the equation may be revised to denote that they are spatial stream index-dependent.

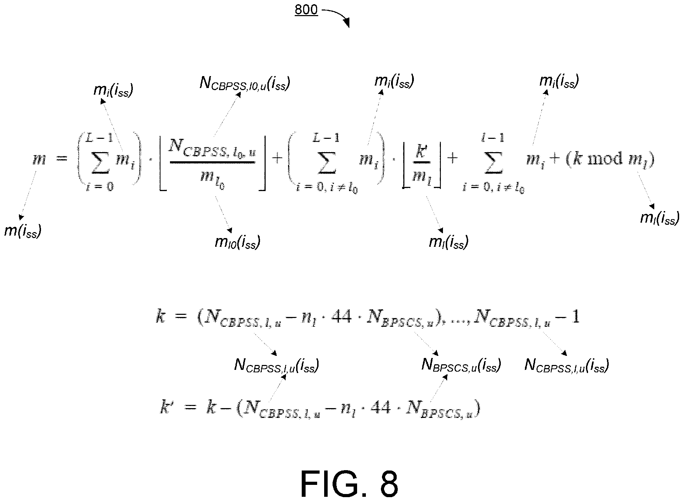

FIG. 8 illustrates an example design 800 under a proposed scheme in accordance with the present disclosure. Design 800 may pertain to segment parsing for UEQM on spatial streams. Design 800 may be implemented by each of STA 110 and STA 120. Under the proposed scheme, the leftover bits may be processed in the same way as a PRR parser for MRUs in accordance with the IEEE 802.11be specification as expressed by the equations shown in FIG. 8, with corresponding changes for UEQM on different spatial streams.

### Illustrative Implementations

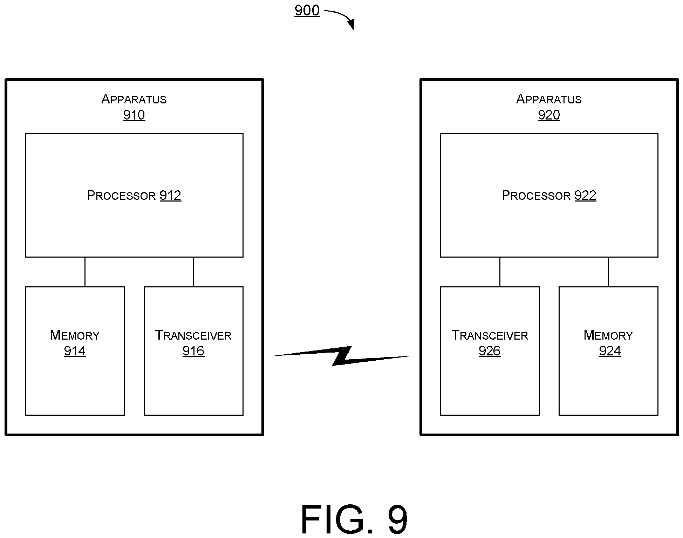

FIG. 9 illustrates an example system 900 having at least an example apparatus 910 and an example apparatus 920 in accordance with an implementation of the present disclosure. Each of apparatus 910 and apparatus 920 may perform various functions to implement schemes, techniques, processes and methods described herein pertaining to stream parser and segment parser designs for UEQM of spatial streams in wireless communications, including the various schemes described above with respect to various proposed designs, concepts, schemes, systems and methods described above as well as processes described below. For instance, apparatus 910 may be implemented in STA 110 and apparatus 920 may be implemented in STA 120, or vice versa.

Each of apparatus 910 and apparatus 920 may be a part of an electronic apparatus, which may be a STA or an AP, such as a portable or mobile apparatus, a wearable apparatus, a wireless communication apparatus or a computing apparatus. When implemented in a STA, each of apparatus 910 and apparatus 920 may be implemented in a smartphone, a smart watch, a personal digital assistant, a digital camera, or a computing equipment such as a tablet computer, a laptop computer or a notebook computer. Each of apparatus 910 and apparatus 920 may also be a part of a machine type apparatus, which may be an IoT apparatus such as an immobile or a stationary apparatus, a home apparatus, a wire communication apparatus or a computing apparatus. For instance, each of apparatus 910 and apparatus 920 may be implemented in a smart thermostat, a smart fridge, a smart door lock, a wireless speaker or a home control center. When implemented in or as a network apparatus, apparatus 910 and/or apparatus 920 may be implemented in a network node, such as an AP in a WLAN.

In some implementations, each of apparatus 910 and apparatus 920 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 910 and apparatus 920 may be implemented in or as a STA or an AP. Each of apparatus 910 and apparatus 920 may include at least some of those components shown in FIG. 9 such as a processor 912 and a processor 922, respectively, for example. Each of apparatus 910 and apparatus 920 may further include one or more other components not pertinent to the proposed scheme of the present disclosure (e.g., internal power supply, display device and/or user interface device), and, thus, such component(s) of apparatus 910 and apparatus 920 are neither shown in FIG. 9 nor described below in the interest of simplicity and brevity.

In one aspect, each of processor 912 and processor 922 may be implemented in the form of one or more single-core processors, one or more multi-core processors, one or more RISC processors or one or more CISC processors. That is, even though a singular term "a processor" is used herein to refer to processor 912 and processor 922, each of processor 912 and processor 922 may include multiple processors in some implementations and a single processor in other implementations in accordance with the present disclosure. In another aspect, each of processor 912 and processor 922 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 912 and processor 922 is a special-purpose machine specifically designed, arranged and configured to perform specific tasks including those pertaining to stream parser and segment parser designs for UEQM of spatial streams in wireless communications in accordance with various implementations of the present disclosure. For instance, each of processor 912 and 922 may be configured with electronic circuitry implementing one or more of the designs of a UEQM transmitter (e.g., one or more of designs 200, 300, 400, 500, 600, 700 and 800) for transmission of MRUs and/or wider bandwidths as described herein.

In some implementations, apparatus 910 may also include a transceiver 916 coupled to processor 912. Transceiver 916 may include a transmitter capable of wirelessly transmitting and a receiver capable of wirelessly receiving data. In some implementations, apparatus 920 may also include a transceiver 926 coupled to processor 922. Transceiver 926 may include a transmitter capable of wirelessly transmitting and a receiver capable of wirelessly receiving data. It is noteworthy that, although transceiver 916 and transceiver 926 are illustrated as being external to and separate from processor 912 and processor 922, respectively, in some implementations, transceiver 916 may be an integral part of processor 912 as a system on chip (SoC) and/or transceiver 926 may be an integral part of processor 922 as a SoC.

In some implementations, apparatus 910 may further include a memory 914 coupled to processor 912 and capable of being accessed by processor 912 and storing data therein. In some implementations, apparatus 920 may further include a memory 924 coupled to processor 922 and capable of being accessed by processor 922 and storing data therein. Each of memory 914 and memory 924 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 914 and memory 924 may include a type of read-only memory (ROM) such as mask ROM, programmable ROM (PROM), erasable programmable ROM (EPROM) and/or electrically erasable programmable ROM (EEPROM). Alternatively, or additionally, each of memory 914 and memory 924 may include a type of non-volatile random-access memory (NVRAM) such as flash memory, solid-state memory, ferroelectric RAM (FeRAM), magnetoresistive RAM (MRAM) and/or phase-change memory.

Each of apparatus 910 and apparatus 920 may be a communication entity capable of communicating with each other using various proposed schemes in accordance with the present disclosure. For illustrative purposes and without limitation, a description of capabilities of apparatus 910, as STA 110, and apparatus 920, as STA 120, is provided below in the context of process 1000. It is noteworthy that, although a detailed description of capabilities, functionalities and/or technical features of apparatus 910 is provided below, the same may be applied to apparatus 920 although a detailed description thereof is not provided solely in the interest of brevity. It is also noteworthy that, although the example implementations described below are provided in the context of WLAN, the same may be implemented in other types of networks.

### Illustrative Processes

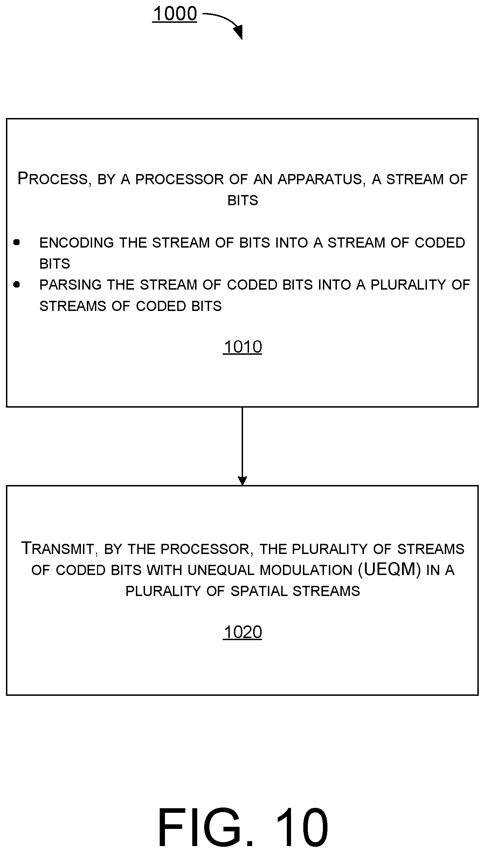

FIG. 10 illustrates an example process 1000 in accordance with an implementation of the present disclosure. Process 1000 may represent an aspect of implementing various proposed designs, concepts, schemes, systems and methods described above. More specifically, process 1000 may represent an aspect of the proposed concepts and schemes pertaining to stream parser and segment parser designs for UEQM of spatial streams in wireless communications in accordance with the present disclosure. Process 1000 may include one or more operations, actions, or functions as illustrated by one or more of blocks 1010 and 1020. Although illustrated as discrete blocks, various blocks of process 1000 may be divided into additional blocks, combined into fewer blocks, or eliminated, depending on the desired implementation. Moreover, the blocks/sub-blocks of process 1000 may be executed in the order shown in FIG. 10 or, alternatively, in a different order. Furthermore, one or more of the blocks/sub-blocks of process 1000 may be executed repeatedly or iteratively. Process 1000 may be implemented by or in apparatus 910 and apparatus 920 as well as any variations thereof. Solely for illustrative purposes and without limiting the scope, process 1000 is described below in the context of apparatus 910 implemented in or as STA 110 and apparatus 920 implemented in or as STA 120 of a wireless network such as a WLAN in network environment 100 in accordance with one or more of IEEE 802.11 standards. Process 1000 may begin at block 1010.

At 1010, process 1000 may involve processor 912 of apparatus 910 (e.g., STA 110) processing a stream of bits by: (a) encoding the stream of bits into a stream of coded bits; and (b) parsing the stream of coded bits into a plurality of streams of coded bits. Process 1000 may proceed from 1010 to 1020.

At 1020, process 1000 may involve processor 912 transmitting, via transceiver 916, the plurality of streams of coded bits with UEQM in a plurality of spatial streams.

In some implementations, in parsing the stream of coded bits, process 1000 may involve processor 912 performing certain operations. For instance, process 1000 may involve processor 912 performing stream parsing, by a stream parser of the processor, on the stream of coded bits to provide the plurality of spatial bits. Moreover, process 1000 may involve processor 912 performing segment parsing, by a plurality of segment parsers of the processor, on the plurality of spatial bits.

In some implementations, in performing the stream parsing, process 1000 may involve processor 912 performing a round robin-style parsing to allocate bits of the stream of encoded bits into the plurality of spatial streams. In some implementations, in performing the round robin-style parsing, process 1000 may involve processor 912 performing the round robin-style parsing according to the IEEE 802.11n or HT specification, with a number of spatial streams among the plurality of spatial streams ranging from 2 to 4, and with a number of coded bits per subcarrier per spatial stream ranging from 2 to 12.

In some implementations, in performing the segment parsing, process 1000 may involve processor 912 performing, by each segment parser of the plurality of segment parsers, a PRR-style parsing, as defined in the IEEE 802.11be specification, on each spatial stream to allocate bits of a respective spatial stream onto a plurality of RUs.

In some implementations, in performing the segment parsing, process 1000 may involve processor 912 performing the segment parsing on a per-spatial stream basis as described in the IEEE 802.11be specification by using parameters corresponding to a respective modulation order of each stream.

In some implementations, a plurality of parameters of each segment parser of the plurality of segment parsers may be spatial stream index-dependent. For instance, with "s" denoting a bit sequence and "iss" denoting a spatial stream index, the plurality of parameters may include at least the following: (1) a respective bit sequence of a given spatial stream (*s*(*iₛₛ*)); (2) a number of coded bits per spatial stream per user (N_{CBPSS,u}(*iₛₛ*)); (3) a number of coded bits per spatial stream per frequency subblock per user (N_{CBPSS,l,u}(*iₛₛ*)); (4) a number of bits per subcarrier per spatial stream (N_{BPSCS,u}(*iₛₛ*)); and (5) a number of bit sequences allocated per resource unit (RU) in the given spatial stream (m₀(*iₛₛ*), m₁(*iₛₛ*), m₂(*iₛₛ*), m₃(*iₛₛ*)).

In some implementations, a first modulation (or MCS) may be applied to a first spatial stream of the plurality of spatial streams while a second modulation (or MCS) may be applied to a second spatial stream of the plurality of spatial streams, and the first modulation (or MCS) and the second modulation (or MCS) may be different (e.g., with QPSK applied to one spatial stream and 16QAM applied to another spatial stream).

In some implementations, in transmitting the plurality of streams of coded bits with UEQM, process 1000 may involve processor 912 transmitting the plurality of streams of coded bits with different modulations (or MCSs) applied across different spatial streams of the plurality of spatial streams.

In some implementations, in transmitting the plurality of streams of coded bits with UEQM, process 1000 may involve processor 912 transmitting the plurality of streams of coded bits with the UEQM on one or more MRUs and/or a wide bandwidth (e.g., 320MHz).

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
processing (1010), by a processor of an apparatus, a stream of bits by:
encoding the stream of bits into a stream of coded bits; and
parsing the stream of coded bits into a plurality of streams of coded bits; and
transmitting (1020), by the processor, the plurality of streams of coded bits with unequal modulation, in the following also referred to as UEQM, in a plurality of spatial streams.

2. The method of Claim 1, wherein the parsing of the stream of coded bits comprises:
performing stream parsing, by a stream parser of the processor, on the stream of coded bits to provide the plurality of spatial bits; and
performing segment parsing, by a plurality of segment parsers of the processor, on the plurality of spatial bits.

3. The method of Claim 2, wherein the performing of the stream parsing comprises performing a round robin-style parsing to allocate bits of the stream of encoded bits into the plurality of spatial streams.

4. The method of Claim 3, wherein the performing of the round robin-style parsing comprises performing the round robin-style parsing according to an Institute of Electrical and Electronics Engineers, in the following also referred to as IEEE, 802.11n or High Throughput, in the following also referred to as HT, specification, wherein a number of spatial streams among the plurality of spatial streams ranges from 2 to 4, and wherein a number of coded bits per subcarrier per spatial stream ranges from 2 to 12.

5. The method of any one of Claims 2 to 4, wherein the performing of the segment parsing comprises performing, by each segment parser of the plurality of segment parsers, a proportional round robin, in the following also referred to as PRR, -style parsing, as defined in an IEEE 802.11be specification, on each spatial stream to allocate bits of a respective spatial stream onto a plurality of resource units, in the following also referred to as RUs.

6. The method of any one of Claims 2 to 5, wherein the performing of the segment parsing comprises performing the segment parsing on a per-spatial stream basis as described in an IEEE 802.11be specification by using parameters corresponding to a respective modulation order of each stream.

7. The method of Claim 6, wherein a plurality of parameters of each segment parser of the plurality of segment parsers are spatial stream index-dependent, and wherein, with "s" denoting a bit sequence and "*iₛₛ*" denoting a spatial stream index, the plurality of parameters comprise at least:
a respective bit sequence of a given spatial stream (*s(iₛₛ)*);
a number of coded bits per spatial stream per user (N_{CBPSS,u}(*iₛₛ*));
a number of coded bits per spatial stream per frequency subblock per user (N_{CBPSS,l,u}(*iₛₛ*));
a number of bits per subcarrier per spatial stream (N_{BPSCS,u}(*iₛₛ*)); and
a number of bit sequences allocated per RU in the given spatial stream (m₀(*iₛₛ*), m₁(*iₛₛ*), m₂(*iₛₛ*), m₃(*iₛₛ*)).

8. The method of any one of Claims 2 to 7, wherein a first modulation or modulation and coding scheme, in the following also referred to as MCS, is applied to a first spatial stream of the plurality of spatial streams, wherein a second modulation or MCS is applied to a second spatial stream of the plurality of spatial streams, and wherein the first modulation or MCS and the second modulation or MCS are different.

9. The method of any one of Claims 1 to 8, wherein the transmitting of the plurality of streams of coded bits with UEQM comprises transmitting the plurality of streams of coded bits with different modulations or MCSs applied across different spatial streams of the plurality of spatial streams.

10. The method of any one of Claims 1 to 9, wherein the transmitting of the plurality of streams of coded bits with UEQM comprises transmitting the plurality of streams of coded bits with the UEQM on one or more multi-resource units, in the following also referred to as MRUs.

11. An apparatus (910), comprising:
a transceiver (916) configured to communicate wirelessly; and
a processor (912) coupled to the transceiver (916) and configured to perform operations comprising:
processing a stream of bits by:
encoding the stream of bits into a stream of coded bits; and
parsing the stream of coded bits into a plurality of streams of coded bits; and
transmitting, via the transceiver (916), the plurality of streams of coded bits with unequal modulation, in the following also referred to as UEQM, in a plurality of spatial streams.

12. The apparatus (910) of Claim 11, wherein the parsing of the stream of coded bits comprises:
performing stream parsing, by a stream parser of the processor (912), on the stream of coded bits to provide the plurality of spatial bits; and
performing segment parsing, by a plurality of segment parsers of the processor (912), on the plurality of spatial bits.

13. The apparatus (910) of Claim 12, wherein the performing of the stream parsing comprises performing a round robin-style parsing to allocate bits of the stream of encoded bits into the plurality of spatial streams, wherein the performing of the round robin-style parsing comprises performing the round robin-style parsing according to an Institute of Electrical and Electronics Engineers, in the following also referred to as IEEE, 802.11n or High Throughput specification, wherein a number of spatial streams among the plurality of spatial streams ranges from 2 to 4, and wherein a number of coded bits per subcarrier per spatial stream ranges from 2 to 12.

14. The apparatus of Claim 12 or 13, wherein the performing of the segment parsing comprises performing, by each segment parser of the plurality of segment parsers, a proportional round robin, in the following also referred to as PRR, -style parsing, as defined in an IEEE 802.11be specification, on each spatial stream to allocate bits of a respective spatial stream onto a plurality of resource units, in the following also referred to as RUs.

15. The apparatus of any one of Claims 12 to 14, wherein the performing of the segment parsing comprises performing the segment parsing on a per-spatial stream basis as described in an IEEE 802.11be specification by using parameters corresponding to a respective modulation order of each stream.
